# EUROPÄISCHE PATENTSCHRIFT

(11) **EP 1 753 943 B1**
(45) Veröffentlichungstag und Bekanntmachung des Hinweises auf die Patenterteilung: **13.03.2013**
(21) Anmeldenummer: 05745090.0
(22) Anmeldetag: 24.05.2005
(51) Int. Cl.: F01P 11/10, B60K 11/04, F01P 5/06

(54) **KÜHLSYSTEM**
COOLING SYSTEM
SYSTEME DE REFROIDISSEMENT

(30) Priorität: 26.05.2004 DE 102004026328
(43) Veröffentlichungstag der Anmeldung: 21.02.2007
(73) Patentinhaber: Behr GmbH & Co. KG, 70469 Stuttgart (DE)
(72) Erfinder: ROGG, Stefan, 70193 Stuttgart (DE)
(74) Vertreter: Grauel, Andreas
(86) Internationale Anmeldenummer: PCT/EP2005/005591
(87) Internationale Veröffentlichungsnummer: WO 2005/119024

(56) Entgegenhaltungen:
- EP-A- 1 167 165
- DE-A1- 3 015 941
- US-A- 5 046 550
- US-A- 5 193 608
- PATENT ABSTRACTS OF JAPAN Bd. 009, Nr. 219 (M-410), 6. September 1985 (1985-09-06) -& JP 60 078827 A (MAZDA KK), 4. Mai 1985 (1985-05-04)

## Beschreibung

Die Erfindung betrifft ein Kühlsystem für ein Kraftfahrzeug, mit mindestens einem Wärmetauscher, insbesondere einem Kühler, der von einem Medium, insbesondere von Kühlmittel, durchflossen wird, das zum Beispiel zur Kühlung eines Motors dient, und der eine Wärmetauscher-Luftdurchtrittsfläche aufweist, die in einer ersten Betriebsphase, insbesondere in einem so genannten Staudruckbetrieb, von einer Luftströmung entlang einem ersten Luftströmungspfad durchströmt wird, und die in einer zweiten Betriebsphase, insbesondere in einem so genannten Lüfterbetrieb, zusätzlich oder alternativ von einer Luftströmung entlang einem zweiten Luftströmungspfad durchströmt wird, der durch eine Luftfördereinrichtung verläuft, die zwischen dem Wärmetauscher und dem Motor angeordnet und die eine Förder-Luftdurchtrittsfläche aufweist.

In derartigen Kühlsystemen wird die Luftfördereinrichtung zum Beispiel von einem Lüfter gebildet. Der Lüfter hat die Aufgabe, den Kühler und den Motorraum mit einer ausreichenden Kühlluftmenge zu durchströmen, wenn der Fahrtwind nicht ausreicht, zum Beispiel bei langsamer Fahrt oder bei Stillstand des Fahrzeugs. Somit ist das erforderliche Fördervolumen des Lüfters, je nach Betriebszustand des Fahrzeugs, sehr unterschiedlich. Bei niedrigen Geschwindigkeiten wird der für die Förderung der Kühlluftströmung nötige Druckaufbau von dem Lüfter bereitgestellt. Bei hohen Geschwindigkeiten behindert der Lüfter die Kühlluftströmung, wodurch der Druckverlust ansteigt. Aus dem Stand der Technik sind verschiedene Maßnahmen bekannt, um die Behinderung der Kühlluftströmung durch den Lüfter zu reduzieren. Aus der deutschen Offenlegungsschrift DE 43 04 336 A1, der deutschen Offenlegungsschrift DE 39 42 010 A1 und der britischen Patentanmeldung GB 2311 843 A sind Kühlsysteme mit Kühl-Luftklappen bekannt, die in Abhängigkeit vom Staudruck beziehungsweise der Geschwindigkeit des Fahrzeugs öffnen oder schließen, um die Kühlluftströmung zu beeinflussen. Die Kühl-Luftklappen werden bei einem hohen Staudruck geöffnet und ermöglichen so eine teilweise Umgehung des durch den Lüfter und gegebenenfalls durch eine Lüfterzarge verursachten Strömungswiderstands. Aus der internationalen Patentanmeldung WO 03/013894 A2 und der europäischen Patentanmeldung EP 0 919 705 A2 sind Kühlsysteme bekannt, bei denen die Kühlluftströmung im Lüfterbetrieb mithilfe von, bezogen auf die Durchströmungsrichtung des Kühlers, seitlich angeordneten Lüftern seitlich abgeführt wird.

Aufgabe der Erfindung ist es, ein Kühlsystem für ein Kraftfahrzeug, mit mindestens einem Wärmetauscher, insbesondere einem Kühler, der von einem Medium, insbesondere von Kühlmittel, durchflossen wird, das zum Beispiel zur Kühlung eines Motors dient, und der eine Wärmetauscher-Luftdurchtrittsfläche aufweist, die in einer ersten Betriebsphase, insbesondere in einem so genannten Staudruckbetrieb, von einer Luftströmung entlang einem ersten Luftströmungspfad durchströmt wird, und die in einer zweiten Betriebsphase, insbesondere in einem so genannten Lüfterbetrieb, zusätzlich oder alternativ von einer Luftströmung entlang einem zweiten Luftströmungspfad durchströmt wird, der durch eine Luftfördereinrichtung verläuft, die eine Förder-Luftdurchtrittsfläche aufweist, zu schaffen, bei dem einerseits die Kühlluftströmung in der ersten Betriebsphase entlang dem ersten Luftströmungspfad möglichst wenig behindert wird, und das andererseits in der zweiten Betriebsphase eine verlustarme Förderung der Kühlluftströmung entlang dem zweiten Luftströmungspfad ermöglicht.

Die Aufgale wird gelöst mit dem Merkmalen von Anspruch 1

Vorbeilhalt ist bei einem Kühlsystem für ein Kraftfahrzeug, mit mindestens einem Wärmetauscher, insbesondere einem Kühler, der von einem Medium, insbesondere von Kühlmittel, durchflossen wird, das zum Beispiel zur Kühlung eines Motors dient, und der eine Wärmetauscher-Lufidurchtrittsfläche aufweist, die in einer ersten Betriebsphase, insbesondere in einem so genannten Staudruckbetrieb, von einer Luftströmung entlang einem ersten Luftströmungspfad durchströmt wird, und die in einer zweiten Betriebsphase, insbesondere in einem so genannten Lüfterbetrieb, zusätzlich oder alternativ von einer Luftströmung entlang einem zweiten Luftströmungspfad durchströmt wird, der durch eine Luftfördereinrichtung verläuft, die eine Förder-Luftdurchtrittsfläche aufweist, dass die Luftfördereinrichtung und der Wärmetauscher so gestaltet und angeordnet sind, dass eine Parallelprojektion der Förder-Luftdurchtrittsfläche in Längsrichtung des Fahrzeugs auf die Ebene, in der die Wärmetauscher-Luftdurchtrittsfläche liegt, zumindest teilweise über die Wärmetauscher-Luftdurchtrittsfläche hinaus ragt, und dass ein erheblicher Teil der Wärmetauscher-Luftdurchtrittsfläche nicht von der Parallelprojektion der Förder-Luftdurchtrittsfläche überdeckt wird. Im Rahmen der vorliegenden Erfindung wurde herausgefunden, dass bei den bekannten Kühlsystemen oft ein oder mehrere Lüfter den größten Teil der Kühler-Luftdurchtrittsfläche versperren. Die bekannte seitliche Anordnung von Lüftern führt dazu, dass die Kühlluftströmung mehrfach umgelenkt werden und einen relativ langen Strömungsweg bis zu den Lüftern zurücklegen muss. Durch die exzentrische Anordnung der Luftfördereinrichtung entsteht eine große Fläche hinter dem Kühler, die mittels einer die Kühlluftströmung steuernden oder regelnden Einrichtung wahlweise versperrt oder freigegeben werden kann. Dadurch kann die Kühlluftmenge bei hohen Geschwindigkeiten erhöht werden. Trotz der exzentrischen Anordnung der Luftfördereinrichtung wird bei langsamen Geschwindigkeiten eine gute Belüftung des Kühlers gewährleistet, da im Lüfterbetrieb keine starke Umlenkung der Kühlluftströmung erforderlich ist.

Ein bevorzugtes Ausführungsbeispiel des Kühlsystems ist dadurch gekennzeichnet, dass die Luftfördereinrichtung und der Wärmetauscher so gestaltet und angeordnet sind, dass 40% bis 70% der Wärmetauscher-Luftdurchtrittsfläche nicht von der Parallelprojektion der Förder-Luftdurchtrittsfläche überdeckt werden. Dadurch kann die Kühlluftmenge bei Fahrgeschwindigkeiten von über 100 km/h um bis zu 20% angehoben werden, was zu einer erheblichen Steigerung der Kühlleistung führt.

Ein weiteres bevorzugtes Ausführungsbeispiel des Kühlsystems ist dadurch gekennzeichnet, dass in dem Bereich, der nicht von der Parallelprojektion der Förder-Luftdurchtrittsfläche überdeckt wird, zwischen dem Wärmetauscher und dem Motor eine Einrichtung zum Steuern der Luftströmung vorgesehen ist. Die Einrichtung zum Steuern der Kühlluftströmung kann bei niedrigen Umgebungstemperaturen dazu verwendet werden, die Kühlluftströmung zu unterbrechen beziehungsweise stark zu reduzieren, um eine schnellere Aufheizung des Motors und gegebenenfalls eines Fahrgastraums zu ermöglichen.

Ein weiteres bevorzugtes Ausführungsbeispiel des Kühlsystems ist dadurch gekennzeichnet, dass die Einrichtung zum Steuern der Luftströmung eine Kühlluftjalousie umfasst. Die Kühlluftjalousie wird vorzugsweise über eine aktive Steuerung betätigt. Alternativ ist eine staudruckabhängige Steuerung oder Regelung möglich.

Ein weiteres bevorzugtes Ausführungsbeispiel des Kühlsystems ist dadurch gekennzeichnet, dass die Förder-Luftdurchtrittsfläche im Wesentlichen parallel zu der Wärmetauscher-Luftdurchtrittsfläche angeordnet ist. Dadurch wird gewährleistet, dass entlang dem zweiten Luftströmungspfad keine starke Umlenkung der Kühlluftströmung erforderlich ist.

Ein weiteres bevorzugtes Ausführungsbeispiel des Kühlsystems ist dadurch gekennzeichnet, dass die Förder-Luftdurchtrittsfläche relativ zu der Wärmetauscher-Luftdurchtrittsfläche geneigt angeordnet ist. Der Neigungswinkel ist vorzugsweise so gewählt, dass ohne starke Umlenkung der Kühlluftströmung eine optimale Durchströmung des Kühlsystems und des Motorraums gewährleistet wird. Als besonders vorteilhaft hat sich dabei im Rahmen der vorliegenden Erfindung erwiesen, wenn der von Förder-Luftdurchtrittsfläche und Wärmetauscher-Luftdurchtrittsfläche eingeschlossene Winkel zwischen 10° und 40° beträgt.

Ein weiteres bevorzugtes Ausführungsbeispiel des Kühlsystems ist dadurch gekennzeichnet, dass die Luftfördereinrichtung mindestens einen Axiallüfter umfasst. Je nach Anforderung an die Kühlleistung können ein Lüfter oder mehrere Lüfter zum Einsatz kommen.

Ein weiteres bevorzugtes Ausführungsbeispiel des Kühlsystems ist dadurch gekennzeichnet, dass der Axiallüfter einen Durchmesser von 250 mm bis 400 mm aufweist. Je nach Einsatzfall können auch hiervon abweichende Durchmesser geeignet sein.

Ein weiteres bevorzugtes Ausführungsbeispiel des Kühlsystems ist dadurch gekennzeichnet, dass der Axiallüfter eine Drehachse aufweist, die radial au-βerhalb der Wärmetauscher-Luftdurchtrittsfläche angeordnet ist. Diese Anordnung hat sich im Rahmen der vorliegenden Erfindung als besonders vorteilhaft erwiesen.

Ein weiteres bevorzugtes Ausführungsbeispiel des Kühlsystems ist dadurch gekennzeichnet, dass die Luftfördereinrichtung von einer Lüfterzarge eingefasst ist. Die Lüfterzarge dient dazu, die Kühlluftströmung zu der Luftfördereinrichtung zu leiten.

Ein weiteres bevorzugtes Ausführungsbeispiel des Kühlsystems ist dadurch gekennzeichnet, dass die Lüfterzarge als selbst tragende Einheit ausgebildet ist. Dadurch wird eine ausreichende mechanische Stabilität der Lüfterzarge gewährleistet.

Ein weiteres bevorzugtes Ausführungsbeispiel des Kühlsystems ist dadurch gekennzeichnet, dass die Lüfterzarge zwei Streben aufweist, welche die Einrichtung zum Steuern der Luftströmung seitlich begrenzen. Auf diese Art und Weise können große Steuerflächen in die Lüfterzarge integriert werden, ohne die mechanische Stabilität zu schwächen.

Vorteilhaft ist es auch, wenn die Steuerfläche in zwei Teile aufgeteilt wird und zwischen den Teil-Steuerflächen eine Mittelstrebe zusätzlich zu den seitlichen Streben eingeführt wird. Weiterhin ist es vorteilhaft, wenn die Lüfterzarge oberhalb und/oder unterhalb der Steuerflächen Querstreben aufweist. Durch diese zusätzlichen Streben wird eine hohe Stabilität der Lüfterzarge erreicht und die Wahrscheinlichkeit verringert, dass die beweglichen Teile der Steuerflächen aufgrund einer Deformation der Lüfterzarge verklemmt werden können. Die Streben, die die Steuerflächen umgeben, können auch als zu den Steuerflächen gehörende Rahmen ausgeführt sein.

Es ist vorteilhaft, die Mittelstrebe bei Luftfördereinrichtungen mit mindestens zwei Axiallüftern so auszuführen, dass sie ringsherum an die Lüfterzarge bzw. an die Wärmetauscher-Austrittsfläche anschließt. Dadurch wird eine Aussteifung erreicht und sichergestellt, dass bei Ausfall eines der Lüfter der durch die Mittelstrebe abgeteilte Bereich durch den Ausfall nicht beeinflusst wird.

Ein weiteres bevorzugtes Ausführungsbeispiel des Kühlsystems ist dadurch gekennzeichnet, dass die Luftströmung durch mindestens eine Lufteintrittsöffnung in der Frontpartie des Kraftfahrzeugs zu dem Wärmetauscher geleitet wird. Die Kühlluftströmung kann zum Beispiel durch einen Kühlergrill mit einer Vielzahl von Lufteintrittsöffnungen geleitet werden.

Ein weiteres bevorzugtes Ausführungsbeispiel des Kühlsystems ist dadurch gekennzeichnet, dass die Lufteintrittsöffnung unterhalb eines Stoßfängers in der Frontpartie des Kraftfahrzeugs angeordnet ist. Es ist vorteilhaft, den Kühler relativ klein zu bemessen und die Kühlluftströmung durch eine oder mehrere Lufteintrittsöffnungen unterhalb des Stoßfängers dem Kühler zuzuführen. Dadurch wird erreicht, dass das Kühlsystem kompakt ausfällt und eine Führung der Kühlluftströmung mit wenigen Umlenkungen erzielt werden kann. Die kompakte Gestaltung ist möglich, weil die gute Luftversorgung des Kühlers dessen Verkleinerung ermöglicht. Die Beschränkung auf Lufteintrittsöffnungen unterhalb des Stoßfängers ist vorteilhaft, weil dadurch der Staudruck unter dem Stoßfänger zur Steigerung der Kühlluftströmung ausgenutzt werden kann. Durch die erfindungsgemäße Anordnung der Lufteintrittsöffnung wird im Frontbereich des Fahrzeugs Bauraum frei, der zum Beispiel für Fußgängerschutzmaßnahmen, eine Absenkung der Haubenlinie oder zur Unterbringung anderer Komponenten verwendet werden kann.

In Abhängigkeit von den Gegebenheiten des Fahrzeugs und der Anordnung der Luftfördereinrichtung kann es vorteilhaft sein, zusätzlich oder anstelle der Lufteintrittsöffnung unterhalb des Stoßfängers Lufteintrittöffnungen oberhalb des Stoßfängers zu nutzen.

Ein weiteres bevorzugtes Ausführungsbeispiel des Kühlsystems ist dadurch gekennzeichnet, dass eine Parallelprojektion der Eintrittsöffnung entgegen der Längsrichtung des Fahrzeugs auf die Ebene, in der die Wärmetauscher Luftdurchtrittsfläche liegt, innerhalb der Wärmetauscher-Luftdurchtrittsfläche liegt. Dadurch wird ein geradliniger Verlauf der Kühlluftströmung von der Eintrittsöffnung bis zum Kühler gewährleistet.

Ein weiteres bevorzugtes Ausführungsbeispiel des Kühlsystems ist dadurch gekennzeichnet, dass die Parallelprojektion der Eintrittsöffnung entgegen der Längsrichtung des Fahrzeugs auf die Ebene, in der die Wärmetauscher-Luftdurchtrittsfläche liegt, innerhalb von dem Teil der Wärmetauscher-Luftdurchtrittsfläche liegt, der nicht von der Parallelprojektion der Förder-Luftdurchtrittsfläche überdeckt wird. Dadurch wird im geöffneten Zustand der Einrichtung zum Steuern der Kühlluftströmung ein geradliniger Verlauf der Kühlluftströmung von der Eintrittsöffnung bis zu der Einrichtung zum Steuern der Kühlluftströmung gewährleistet.

Bei einem Kraftfahrzeug mit einem Kühlsystem ist die oben angegebene Aufgabe durch den Einbau eines vorab beschriebenen Kühlsystems gelöst.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: einen Ausschnitt eines ersten Ausführungsbeispiels des erfindungsgemäßen Kühlsystems in schematischer Darstellung im Lüfterbetrieb;
- Figur 2: das Kühlsystem aus Figur 1 im Staudruckbetrieb;
- Figur 3: das Kühlsystem aus Figur 1 in einer Seitenansicht von links auf den Lüfter und
- Figur 4: eine Seitenansicht wie in Figur 3 mit zwei Lüftern;
- Figur 5: einen Ausschnitt eines zweiten Ausführungsbeispiels des erfindungsgemäßen Kühlsystems in schematischer Darstellung im Lüfterbetrieb;
- Figur 6: das Kühlsystem aus Figur 5 im Staudruckbetrieb;
- Figur 7: einen Ausschnitt eines dritten Ausführungsbeispiels des erfindungsgemäßen Kühlsystems in schematischer Darstellung im Lüfterbetrieb;
- Figur 8: das Kühlsystem aus Figur 7 im Staudruckbetrieb;
- Figur 9: eine Seitenansicht wie in Figur 4 mit zusätzlichen Verstrebungen der Lüfterzarge;
- Figur 10: das Kühlsystem aus Figur 7 in einer Seitenansicht mit zusätzlichen Verstrebungen der Lüfterzarge.

Das im Folgenden beschriebene Kühlsystem 1 ist allgemein für Fahrzeuge, zum Beispiel Personenkraftwagen, Lastkraftwagen, Omnibusse und dergleichen, einsetzbar, die als Antriebsaggregat beispielsweise eine Brennkraftmaschine aufweisen. Das Kühlsystem ist ohne weiteres auch für Elektrofahrzeuge oder Hybridfahrzeuge geeignet.

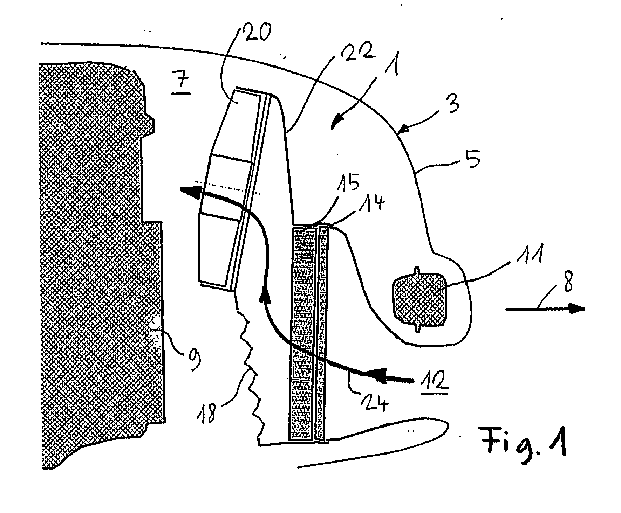

Figur 1 zeigt eine Prinzipskizze eines ersten Ausführungsbeispiels des Kühlsystems 1, das an einem Frontende 5 eines Fahrzeugs 3 in einem Motorraum 7 angeordnet ist. Beim Vorwärtsfahren bewegt sich das Fahrzeug 3 in der Darstellung gemäß Figur 1 von links nach rechts, wie durch einen Pfeil 8 angedeutet ist, der auch die Längsrichtung des Fahrzeugs definiert. Das Kühlsystem 1 ist zwischen dem Motor 9 und dem Frontende 5 des Fahrzeugs 3 angeordnet.

An dem Frontende 5 des Fahrzeugs 3 ist ein Stoßfänger 11 angebracht, unterhalb dessen eine Lufteintrittsöffnung 12 vorgesehen ist. Anstelle einer Lufteintrittsöffnung können auch mehrere Lufteintrittsöffnungen unterhalb des Stoßfängers 11 vorgesehen sein. Die Lufteintrittsöffnung 12 dient dazu, dem Kühlsystem 1 während der Fahrt des Fahrzeugs 3 einen in horizontaler Richtung verlaufenden Luftstrom zuzuführen. Der Luftstrom, der auch als Kühlluftstrom oder Kühlluftströmung bezeichnet wird, gelangt durch die Lufteintrittsöffnung 12 zu einem ersten Wärmetauscher 14.

Der Wärmetauscher 14 oder die Anordnung mehrerer Wärmetauscher 14 wird beispielsweise von einem Ladeluftkühler und/oder einem Kondensator und/oder anderer Wärmetauscher einer Klimaanlage zusammengesetzt oder gebildet. Der Wärmetauscher 14 weist einen Anschlussstutzen auf, über den ein Medium in den Wärmetauscher 14 gelangt, und mindestens einen weiteren zweiten Anschlussstutzen auf, über den das Medium den Wärmetauscher wieder verläßt. Der Aufbau und die Funktion eines solchen Wärmetauschers 14 sind allgemein bekannt, so dass hier nicht näher darauf eingegangen wird. Im Betrieb wird der Wärmetauscher 14 von dem über die Lufteintrittsöffnung 12 zugeführten Luftstrom durchströmt. Dabei tritt der Luftstrom auf der Vorderseite des Wärmetauscher 14 ein und auf der Rückseite des Wärmetauscher 14 aus, ohne im Wärmetauscher umgelenkt zu werden. Das heißt, der den Wärmetauscher 14 in horizontaler Richtung anströmende und im Wesentlichen senkrecht auf die Wärmetauschervorderseite auftreffende Luftstrom durchströmt den Wärmetauscher 14 im Wesentlichen geradlinig und tritt auf der Wärmetauscherrückseite wieder aus.

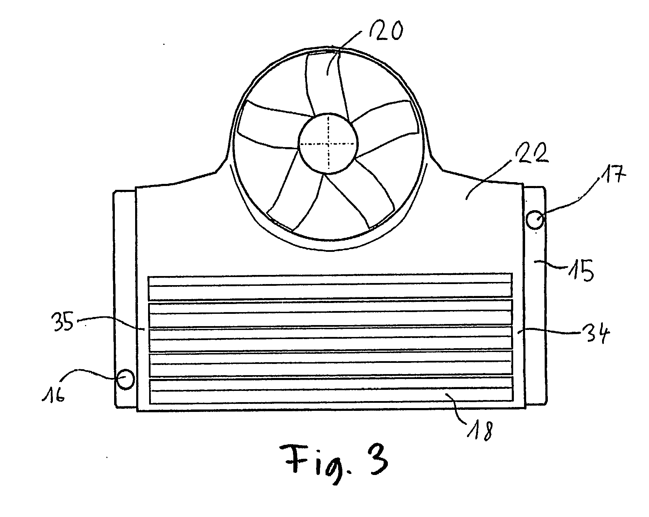

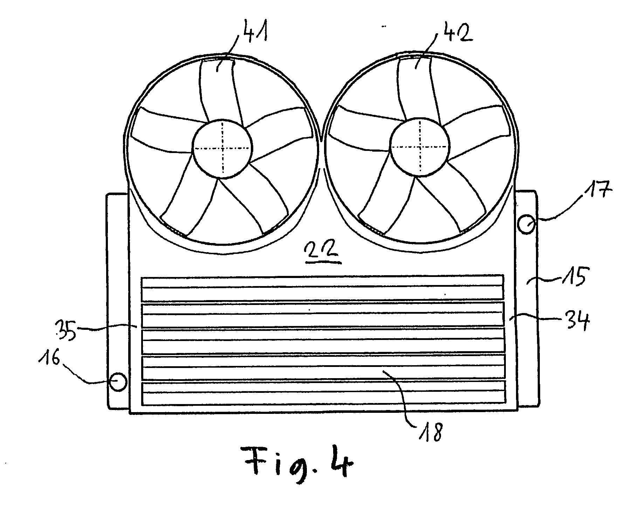

Auf der der Brennkraftmaschine 9 gegenüberliegenden Seite des Wärmetauscher 14 ist zwischen der Brennkraftmaschine 9 und dem Wärmetauscher 14 ein weiterer Wärmetauscher 15, der von einem Kühler gebildet wird, der wie in den Figuren 3 oder 4 gezeigt ist, einen Anschlussstutzen 17 aufweist, über den zum Beispiel ein Kühlmittel in den Wärmetauscher 15 gelangt, und mindestens einen weiteren Anschlussstutzen 16 aufweist, durch den das Kühlmittel wieder austritt und dann zur Brennkraftmaschine geleitet wird. Der Wärmetauscher, wie Kühler, 15 wird, wie der Wärmetauscher 14, von dem Kühlluftstrom in horizontaler Richtung durchströmt.

Zwischen dem Wärmetauscher 15, wie Kühler, und der Brennkraftmaschine 9 ist eine Kühlluftjalousie 18 angeordnet. In Figur 1 ist die Kühlluftjalousie 18 geschlossen, so dass keine Luft durch die Kühlluftjalousie 18 hindurch in den Motorraum 7 gelangt. Oberhalb der Kühlluftjalousie 18 ist ein Lüfter 20 angeordnet, der nach oben über die Wärmetauscher 14 und 15 hinaus ragt. Der Lüfter 20 ist durch eine Lüfterzarge 22 eingefasst, die auch als Lüfterhaube bezeichnet wird. Die Lüfterzarge 22 dient dazu, die durch die Lufteintrittsöffnung 12 eintretende Luftströmung zu dem Lüfter 20 zu leiten. Dabei wird die Luftströmung an der geschlossenen Kühlluftjalousie 18 vorbei geführt, wie durch einen Luftströmungspfad 24 angedeutet ist. Die Kühlluftströmung wird durch den Lüfter 20 in den Motorraum 7 geblasen.

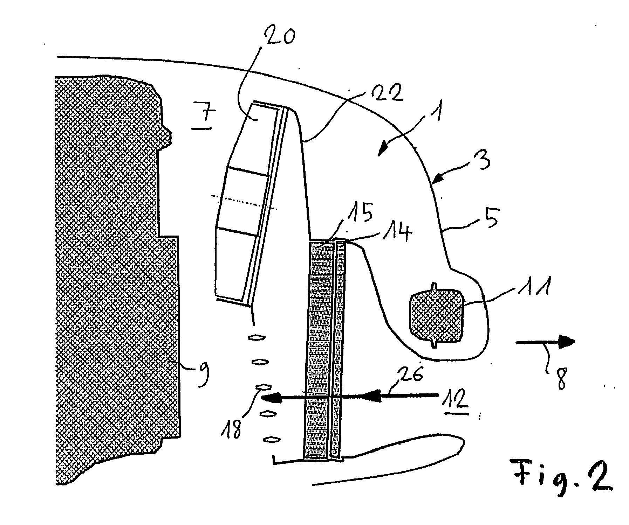

In Figur 2 befindet sich die Kühlluftjalousie 18 in ihrer geöffneten Stellung, so dass die Kühlluftströmung, wie durch einen Luftströmungspfad 26 angedeutet ist, geradlinig von der Lufteintrittsöffnung 12 bis zu der Brennkraftmaschine 9 und an ihr vorbei verläuft.

Die Luftdurchtrittsfläche des Lüfters 20 wird auch als Förder-Luftdurchtrittsfläche bezeichnet. Die Luftdurchtrittsfläche der Wärmetauscher wird auch als Wärmetauscher-Luftdurchtrittsfläche bezeichnet. Die Förder-Luftdurchtrittsfläche des Lüfters 20 überlappt die Wärmetauscher-Luftdurchtrittsfläche nur in einem relativ kleinen im Wesentlichen kreissegmentförmigen Bereich. Circa 40 bis 70 Prozent der Wärmetauscher-Luftdurchtrittsfläche werden von der Kühlluftjalousie 18 abgedeckt. Die Kühlluftjalousie 18 wird über eine aktive Steuerung betätigt. Alternativ ist eine staudruckabhängige Steuerung möglich.

In Figur 3 sieht man, dass die Lüfterzarge 22 als selbst tragende Einheit ausgebildet ist, wobei in erster Linie die Formstabilität der Lüfterzarge 22 zum tragen kommt. Die selbst tragende Einheit ist über zwei Streben 34 und 35 abgestützt, welche die Kühlluftjalousie 18 seitlich begrenzen. Auf diese Weise können große Jalousieflächen in die Lüfterzarge 22 integriert werden, ohne deren mechanische Stabilität zu schwächen.

In Figur 4 ist ein Ausführungsbeispiel mit zwei Lüftern 41 und 42 dargestellt. Bei den Lüftern 42, 42 handelt es sich, wie bei dem Lüfter 20 aus Figur 3, um Axiallüfter, die einen Durchmesser von circa 300 mm aufweisen. Die beiden Lüfter 41 und 42 sind in horizontaler Richtung nebeneinander angeordnet.

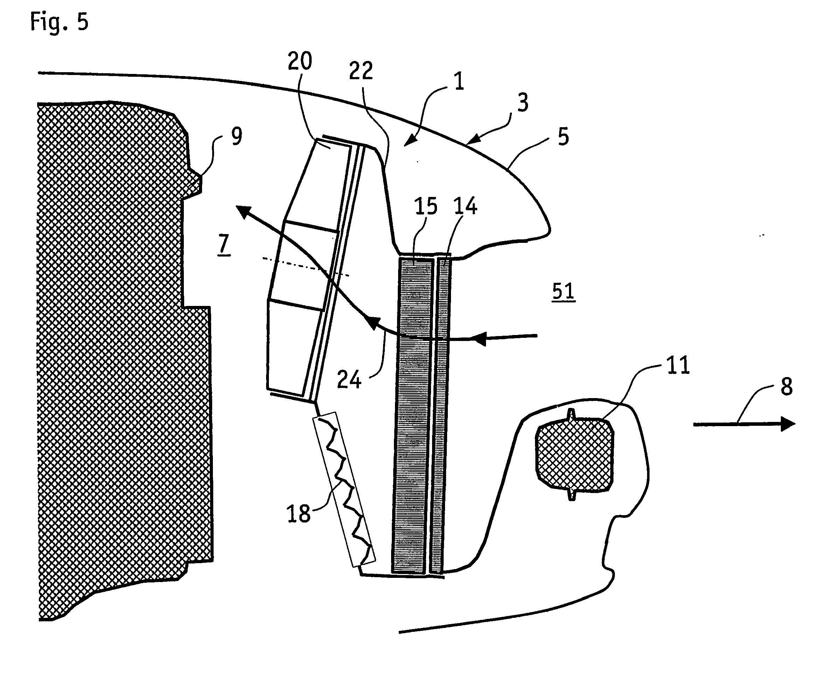

Figur 5 zeigt eine Prinzipskizze eines zweiten Ausführungsbeispiels des Kühlsystems 1, das sich von dem in Figur 1 gezeigten ersten Ausführungsbeispiel dadurch unterscheidet, dass die Lufteintrittsöffnung 51 oberhalb des Stoßfängers 11 vorgesehen ist. Bei geschlossener Kühlluftjalousie 18 verläuft der Luftströmungspfad 24 von der oberen Lufteintrittsöffnung 51 zum Lüfter 20.

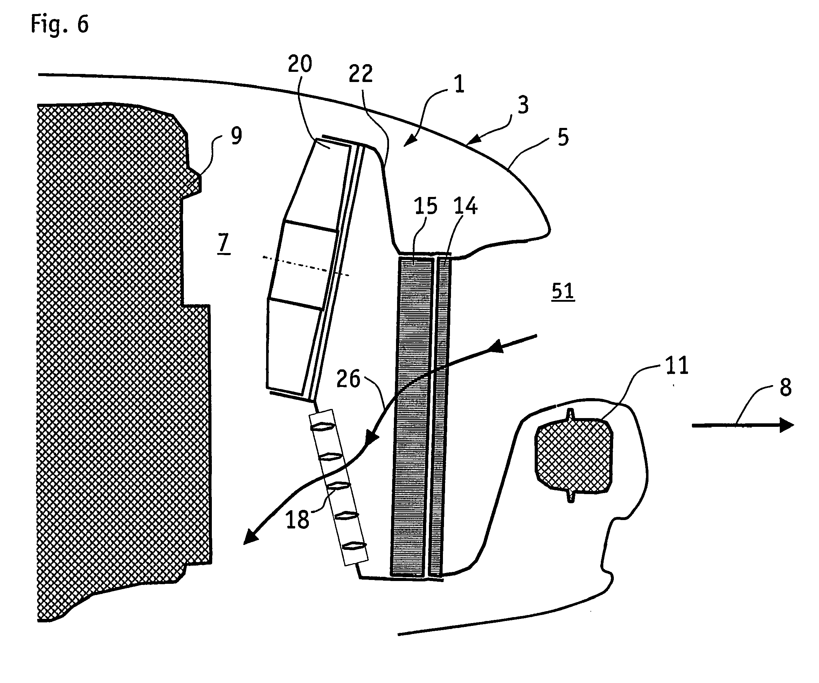

In Figur 6 befindet sich die Kühlluftjalousie 18 in geöffneter Stellung, so dass der Luftströmungspfad 26 von der oberen Lufteintrittsöffnung 51 abwärts zu der Brennkraftmaschine 9 und an ihr vorbei verläuft.

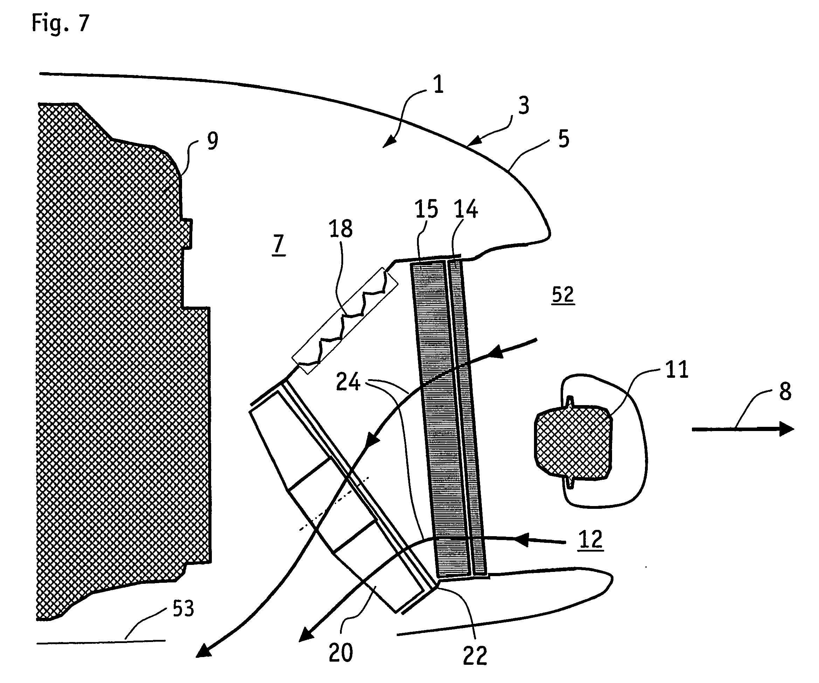

Figur 7 zeigt eine Prinzipskizze eines dritten Ausführungsbeispiels des Kühlsystems 1, das sich von den in den Figuren 1 und 2 gezeigten Ausführungsbeispielen dadurch unterscheidet, dass der Lüfter 20 nicht oberhalb, sondern unterhalb der Kühlluftjalousie 18 angeordnet ist. Der Lüfter 20 ragt dementsprechend nicht nach oben, sondern nach unten über die Wärmetauscher 14 und 15 hinaus. In Figur 7 sind Lufteintrittsöffnungen 12, 52 oberhalb und unterhalb des Stoßfängers vorgesehen. Bei geschlossener Kühlluftjalousie 18 verläuft der Luftströmungspfad 24 jeweils von der oberen und der unteren Lufteintrittsöffnung zum Lüfter 20. Dabei ist der Luftströmungspfad von der oberen Lufteintrittsöffnung 52 zum Lüfter 20 bevorzugt, weil er mit geringeren Umlenkungen der Kühlluft behaftet ist. In Bezug auf die Abströmung der Kühlluft hinter dem Lüfter 20 ist es vorteilhaft, wenn sich im Fahrzeugboden 53 Öffnungen befinden, durch die der Luftstrom den Motorraum 7 verlassen kann.

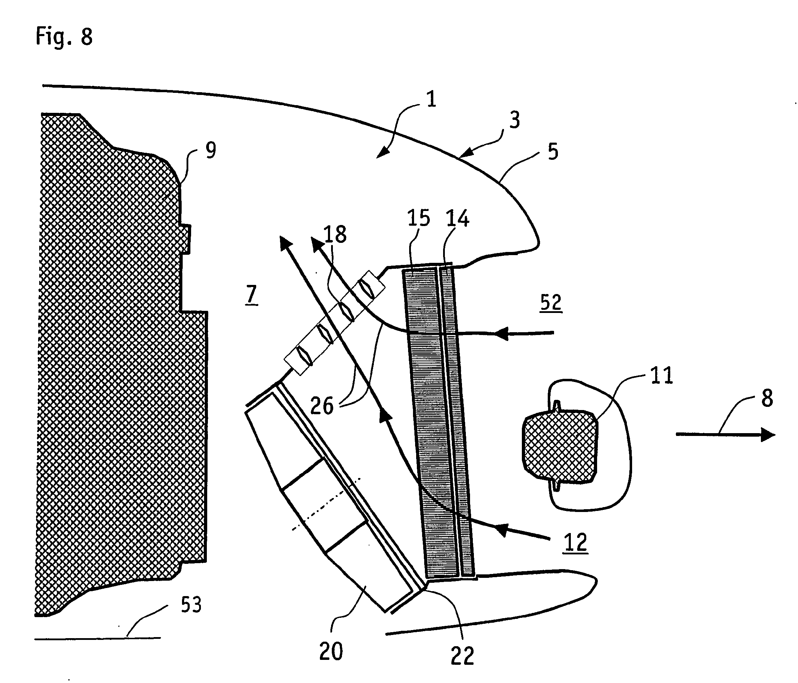

Figur 8 zeigt das Ausführungsbeispiel nach Figur 7 mit geöffneter Kühlluftjalousie 18. In dieser Stellung verläuft der Luftströmungspfad 26 von der oberen und der unteren Lufteintrittsöffnung aufwärts zu der Brennkraftmaschine 9 und an ihr vorbei. Dabei ist der Luftströmungspfad von der unteren Lufteintrittsöffnung 12 zur geöffneten Kühlluftjalousie bevorzugt, weil er mit geringeren Umlenkungen der Kühlluft behaftet ist.

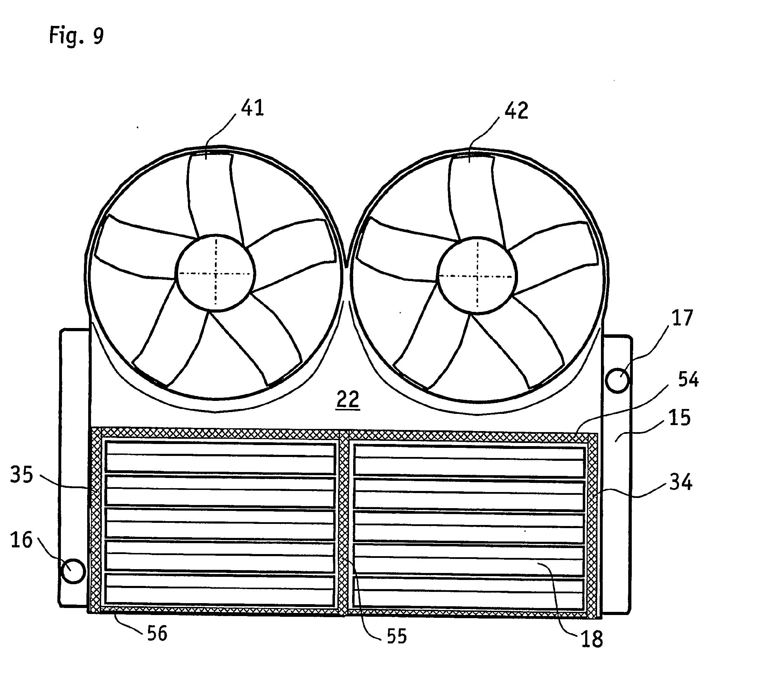

In Figur 9 ist dargestellt, wie die Formstabilität der Lüfterzarge 22 im Bereich der Kühlluftjalousie weiter verbessert werden kann, um eine Verwindung der im Wesentlichen ebenen, von der Kühlluftjalousie abgedeckten Fläche zu verhindern. Die Begrenzung der Verwindung ist von Bedeutung für die Leichtgängigkeit der beweglichen Elemente der Kühlluftjalousie. Zu diesem Zweck werden oberhalb und unterhalb der Kühlluftjalousie Querstreben 54, 56 eingeführt. Für eine noch weitergehende Stabilisierung wird die Kühlluftjalousie in zwei teilflächige Kühlluftjalousien aufgeteilt und zwischen den teilflächigen Kühlluftjalousien eine Mittelstrebe 55 eingeführt. Den maximalen Stabilisierungseffekt durch die Mittelstrebe 55 erhält man, wenn sich die Mittelstrebe 55, wie die seitlichen Streben 34 und 35 auch, über die ganze Höhe der Lüfterzarge 22 erstreckt und bis an den Wärmetauscher 15 herangeführt ist. Die Mittelstrebe 55 nimmt dann gegebenenfalls die Form der seitlichen Projektion der Lüfterzarge 22 an.

Die Querstreben 54, 56 und gegebenenfalls die Mittelstrebe 55 bilden zusammen mit den seitlichen Streben 34 und 35 einen in Figur 9 erkennbaren Rahmen der Kühlluftjalousie bzw. der teilflächigen Jalousien. Dieser Rahmen kann integraler Bestandteil der Lüfterzarge 22 oder der Kühlluftjalousie 18 sein, wobei im letzteren Fall die Kühlluftjalousie mit Rahmen in eine Lüfterzarge ohne Rahmen montiert wird.

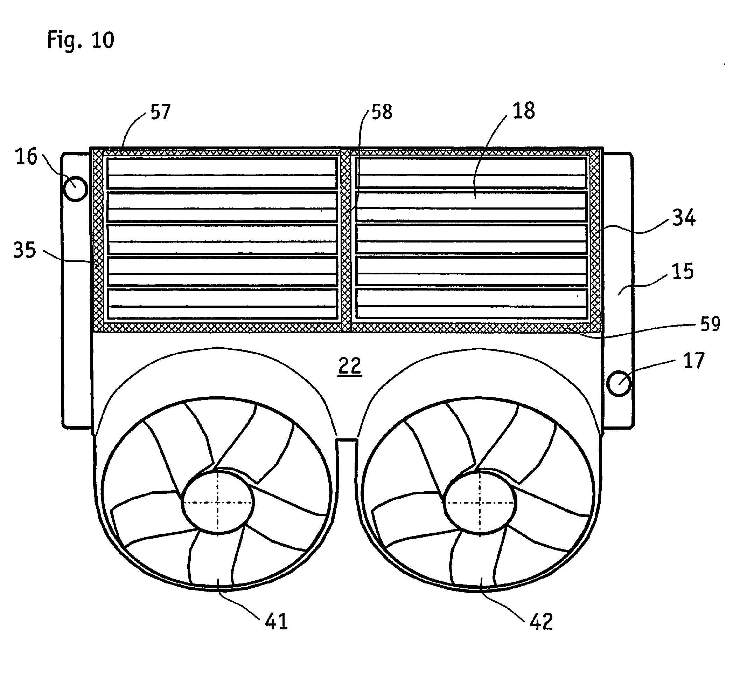

Figur 10 zeigt die Aussteifung durch Streben 34, 35, 57, 58, 59 für die Lüfterzarge 22, wie sie in der Anordnung nach Figur 7 bzw. Figur 8 zum Einsatz kommt. Im Wesentlichen geht diese Anordnung durch Vertauschung der Position der Axiallüfter 41,42 mit der Position der Lüfterzarge 18 samt Rahmen aus Figur 9 hervor.

## Patentansprüche

1. Kühlsystem für ein Kraftfahrzeug (3), mit mindestens einem Wärmetauscher (14, 15), insbesondere einem Kühler, der von einem Medium, insbesondere von Kühlmittel, durchflossen wird, das zum Beispiel zur Kühlung eines Motors (9) dient, und der eine Wärmetauscher-Luftdurchtriftsfläche aufweist, die in einer ersten Betriebsphase, insbesondere in einem so genannten Staudruckbetrieb, von einer Luftströmung entlang einem ersten Luftströmungspfad (26) durchströmt wird, und die in einer zweiten Betriebsphase, insbesondere in einem so genannten Lüfterbetrieb, zusätzlich oder alternativ von einer Luftströmung entlang einem zweiten Luftströmungspfad (24) durchströmt wird, der durch eine Luftfördereinrichtung (20; 41, 42) verläuft, die zwischen dem Wärmetauscher (14, 15) und dem Motor (9) angeordnet und die eine Förder-Luftdurchtrittsfläche aufweist, **dadurch gekennzeichnet, dass** die Luftfördereinrichtung (20; 41, 42) und der Wärmetauscher (14, 15) so gestaltet und angeordnet sind, dass eine Parallelprojektion der Förder-Luftdurchtrittsfläche in Längsrichtung (8) des Fahrzeugs (3) auf die Ebene, in der die Wärmetauscher-Luftdurchtrittsfläche liegt, zumindest teilweise über die Wärmetauscher-Luftdurchtrittsfläche hinaus ragt, und dass ein erheblicher Teil der Wärmetauscher-Luftdurchtrittsfläche nicht von der Parallelprojektion der Förder-Luftdurchtrittsfläche überdeckt wird, wobei die Luftströmung durch mindestens eine Lufteintrittsöffnung (12) in der Frontpartie des Kraftfahrzeugs (3) zu dem Wärmetauscher (14, 15) geleitet wird und die Lufteintrittsöffnung (12) unterhalb eines Stoßfängers (11) in der Frontpartie des Kraftfahrzeugs (3) angeordnet ist oder die Lufteintrittsöffnung oberhalb eines Stoßfängers (11) in der Frontpartie des Kraftfahrzeugs (3) angeordnet ist und die Lufteintrittsöffnung durch Öffnungen gebildet wird, die oberhalb und unterhalb eines Stoßfängers (11) in der Frontpartie des Kraftfahrzeugs (3) angeordnet sind, wobei eine Parallelprojektion der Lufteintrittsöffnung (12) entgegen der Längsrichtung (8) des Fahrzeugs (3) auf die Ebene, in der die Wärmetauscher-Luftdurchtrittsfläche liegt, innerhalb der Wärmetauscher-Luftdurchtrittsftäche liegt und die Parallelprojektion der Lufteintrittsöffnung (12) entgegen der Längsrichtung (8) des Fahrzeugs (3) auf die Ebene, in der die Wärmetauscher-Luftdurchtrittsfläche liegt, innerhalb von dem Teil der Wärmetauscher-Luftdurchtrittsfläche liegt, der nicht von der Parallelprojektion der Förder-Luftdurchtrittsfläche überdeckt wird, wobei 40 bis 70 Prozent der Wärene tanscher durch nitts fläche vor einer Kühlluftjatonsie als Quichtung zum stemen der Luftströnung angedeckt werden.

2. Kühlsystem nach Anspruch 1, **dadurch gekennzeichnet, dass** die Luftfördereinrichtung (20; 41, 42) und der Wärmetauscher (14, 15) so gestaltet und angeordnet sind, dass 40% bis 70% der Wärmetauscher-Luftdurchtrittsfläche nicht von der Parallelprojektion der Förder-Luftdurchtrittsfläche überdeckt werden.

3. Kühlsystem nach einem der vorhergehenden Ansprüche, **dadurch gekennzeichnet, dass** in dem Bereich, der nicht von der Parallelprojektion der Förder-Luftdurchtrittsfläche überdeckt wird, zwischen dem Wärmetauscher (14, 15) und dem Motor (9) die Einrichtung (18) zum Steuern der Luftströmung vorgesehen ist.

4. Kühlsystem nach einem der vorhergehenden Ansprüche, **dadurch gekennzeichnet, dass** die Förder-Lufidurchtrittsfläche im Wesentlichen parallel zu der Wärmetauscher-Luftdurchtrittsfläche angeordnet ist.

5. Kühlsystem nach einem der Ansprüche 1 bis 3, **dadurch gekennzeichnet, dass** die Förder-Luftdurchtrittsfläche relativ zu der Wärmetauscher-Luftdurchtrittsfläche geneigt angeordnet ist.

6. Kühlsystem nach einem der vorhergehenden Ansprüche, **dadurch gekennzeichnet, dass** die Luftfördereinrichtung mindestens einen Axiallüfter (20; 41, 42) umfasst.

7. Kühlsystem nach Anspruch 6, **dadurch gekennzeichnet, dass** der Axiallüfter (20; 41, 42) einen Durchmesser von 250 mm bis 400 mm aufweist.

8. Kühlsystem nach Anspruch 6 oder 7, **dadurch gekennzeichnet, dass** der Axiallüfter (20; 41, 42) eine Drehachse aufweist, die radial außerhalb der Wärmetauscher-Luftdurchtrittsfläche angeordnet ist.

9. Kühlsystem nach einem der vorhergehenden Ansprüche, **dadurch gekennzeichnet, dass** die Luftfördereinrichtung (20; 41, 42) von einer Lüfterzarge (22) eingefasst ist.

10. Kühlsystem nach Anspruch 9, adurch gekennzeichnet, dass die Lüfterzarge (22) als selbst tragende Einheit ausgebildet ist.

11. Kühlsystem nach Anspruch 9 oder 10, **dadurch gekennzeichnet, dass** die Lüfterzarge (22) zwei Streben (34, 35) aufweist, welche die Einrichtung (18) zum Steuern der Luftströmung seitlich begrenzen.

12. Kühlsystem nach Anspruch 8, 10 oder 11, **dadurch gekennzeichnet, dass** die Lüfterzarge (22) eine obere und/oder eine untere Querstrebe aufweist, welche die Einrichtung (18) zum Steuern der Luftströmung oben und/oder unten begrenzt.

13. Kühlsystem nach Anspruch 9, 10, 11 oder 12, **dadurch gekennzeichnet, dass** die Einrichtung (18) zum Steuern der Luftströmung in zwei Teile aufgeteilt ist und die Lüfterzarge (22) in der Teilungsebene eine Mittelstrebe aufweist.

14. Kühlsystem nach Anspruch 12 oder 13, **dadurch gekennzeichnet, dass** ein Rahmen der Einrichtung (18) zum Steuern der Luftströmung mit Streben Teil der Lüfterzarge (22) ist.

15. Kühlsystem nach Anspruch 12 oder 13, **dadurch gekennzeichnet, dass** ein Rahmen der Einrichtung (18) zum Steuern der Luftströmung mit Streben Teil der Einrichtung (18) zum Steuern der Luftströmung ist.

16. Kraftfahrzeug mit einem Kühlsystem (1) nach einem der vorhergehenden Ansprüche.

## Claims

1. A cooling system for a motor vehicle (3), having at least one heat exchanger (14, 15), in particular a radiator being flowed through by a medium, in particular a coolant, which serves, for example, for cooling an engine (9), and having a heat exchanger air passage surface, which is being flowed through by an air flow along a first air flow path (26) in a first operating phase, in particular in a so-called back pressure mode, and which in a second operating phase, in particular in a so-called ventilator mode, is additionally or alternatively flowed through by an air flow along the second air flow path (24) extending through an air delivery device (20; 41, 42), which is disposed between the heat exchanger (14, 15) and the engine (9), and which has a delivery air passage surface, **characterized in that** the air delivery device (20; 41, 42) and the heat exchanger (14, 15) are embodied and disposed such that a parallel projection of the delivery air passage surface is positioned at a plane in longitudinal direction (8) of the motor vehicle (3), in which the heat exchanger air passage surface projects across the heat exchanger air passage surface at least partially, and that a substantial part of the heat exchanger air passage surface is not covered by the parallel projection of the delivery air passage surface, wherein the air flow is directed to the heat exchanger (14, 15) through at least one air inlet orifice (12) in the front part of the motor vehicle (3), and the air inlet orifice (12) is disposed below a bumper (11) in the front part of the motor vehicle (3), or the air inlet orifice is disposed above the bumper (11) in the front part of the motor vehicle (3), and the air inlet orifice is formed by means of openings disposed above and below a bumper (11) in the front part of the motor vehicle (3), wherein a parallel projection of the air inlet orifice (12) is positioned opposite of the longitudinal direction (8) of the motor vehicle (3) at a plane, in which the heat exchanger air passage surface is positioned, is positioned within the heat exchanger air passage surface, and the parallel projection of the air inlet orifice (12) is positioned opposite of the longitudinal direction (8) of the motor vehicle (3) at a plane, in which the heat exchanger air passage surface is positioned, is positioned with **in that** part of the heat exchanger air passage surface, which is not covered by means of the parallel projection of the delivery air passage surface, wherein 40 to 70 percent of the heat exchanger passage surface are covered in a cooling air louver as a device for controlling the air flow.

2. The cooling system according to claim 1, **characterized in that** the air delivery device (20; 41, 42) and the heat exchanger (14, 15) are embodied and disposed such that 40% to 70% of the heat exchanger air passage surface are not covered by the parallel projection of the delivery air passage surface.

3. The cooling system according to one of the previous claims, **characterized in that** the device (18) for controlling the air flow is provided **in that** area, which is not covered by the parallel projection of the delivery air passage surface between the heat exchanger (14, 15) and the engine (9).

4. The cooling system according to one of the previous claims, **characterized in that** the delivery air passage surface is disposed essentially parallel to the heat exchanger air passage surface.

5. The cooling system according to one of the claims 1 to 3, **characterized in that** the delivery air passage surface is disposed relative to the heat exchanger air passage surface at an angle.

6. The cooling system according to one of the previous claims, **characterized in that** the air delivery device comprises at least one axial fan (20; 41, 42).

7. The cooling system according to claim 6, **characterized in that** the axial fan (20; 41, 42) has a diameter of 250 mm to 400 mm.

8. The cooling system according to claims 6 or 7, **characterized in that** the axial fan (20; 41, 42) has a rotational axis, which is disposed radially outside of the heat exchanger air passage surface.

9. The cooling system according to one of the previous claims, **characterized in that** the air delivery device (20; 41, 42) is enclosed by a fan guard (22).

10. The cooling system according to claim 9, **characterized in that** the fan guard (22) is embodied as a self-supporting unit.

11. The cooling system according to claims 9 or 10, **characterized in that** the fan guard (22) has two braces (34, 35), which laterally limit the device (18) for controlling the air flow.

12. The cooling system according to claims 9, 10, or 11, **characterized in that** the fan guard (22) has an upper and/or a lower lateral brace, which limits the device (18) for controlling the air flow at the top and/or at the bottom.

13. The cooling system according to claims 9, 10, 11, or 12, **characterized in that** the device (18) for controlling the air flow is separated into two parts, and the fan guard (22) has a center brace in the separating plane.

14. The cooling system according to claims 12 or 13, **characterized in that** a frame of the device (18) for controlling the air flow with braces is part of the fan guard (22).

15. The cooling system according to claims 12 or 13, **characterized in that** a frame of the device (18) for controlling the air flow with braces is part of the device (18) for controlling the air flow.

16. A motor vehicle having a cooling system (1) according to one of the previous claims.

## Revendications

1. Système de refroidissement pour un véhicule automobile (3), comprenant au moins un échangeur de chaleur (14, 15), en particulier un radiateur qui est traversé par un milieu, en particulier par un liquide de refroidissement qui sert par exemple au refroidissement d'un moteur (9), et qui présente une surface de passage d'air de l'échangeur de chaleur qui, au cours d'une première phase de fonctionnement, en particulier au cours d'un fonctionnement dit en mode pression dynamique, est traversée par un écoulement d'air se produisant le long d'une première trajectoire d'écoulement d'air (26) et qui, au cours d'une deuxième phase de fonctionnement, en particulier au cours d'un fonctionnement dit en mode ventilateur, est traversée en outre, ou en variante, par un écoulement d'air se produisant le long d'une deuxième trajectoire d'écoulement d'air (24) qui s'étend à travers un dispositif de transport d'air (20; 41, 42) qui est disposé entre l'échangeur de chaleur (14, 15) et le moteur (9) et qui présente une surface de passage d'air de transport, **caractérisé en ce que** le dispositif de transport d'air (20; 41, 42) et l'échangeur de chaleur (14, 15) sont configurés et disposés de manière telle, qu'une projection parallèle de la surface de passage d'air de transport, suivant une direction longitudinale (8) du véhicule (3), sur le plan dans lequel se trouve la surface de passage d'air de l'échangeur de chaleur, dépasse au moins partiellement de la surface de passage d'air de l'échangeur de chaleur, et **en ce qu'**une partie très importante de la surface de passage d'air de l'échangeur de chaleur n'est pas recouverte par la projection parallèle de la surface de passage d'air de transport, où l'écoulement de l'air est dirigé jusqu'à l'échangeur de chaleur (14, 15), à travers au moins une ouverture d'entrée d'air (12) située dans la partie avant du véhicule automobile (3), et l'ouverture d'entrée d'air (12) est disposée dans la partie avant du véhicule automobile (3) au-dessous d'un pare-chocs (11), ou bien l'ouverture d'entrée d'air est disposée dans la partie avant du véhicule automobile (3) au-dessus d'un pare-chocs (11), et l'ouverture d'entrée d'air est formée par des ouvertures qui sont disposées dans la partie avant du véhicule automobile (3), au-dessus et au-dessous d'un pare-chocs (11), où une projection parallèle de l'ouverture d'entrée d'air (12), en sens inverse de la direction longitudinale (8) du véhicule (3), sur le plan dans lequel se trouve la surface de passage d'air de l'échangeur de chaleur, se situe à l'intérieur de la surface de passage d'air de l'échangeur de chaleur, et la projection parallèle de l'ouverture d'entrée d'air (12), en sens inverse de la direction longitudinale (8) du véhicule (3), sur le plan dans lequel se trouve la surface de passage d'air de l'échangeur de chaleur, se situe à l'intérieur de la partie de la surface de passage d'air de l'échangeur de chaleur qui n'est pas recouverte par la projection parallèle de la surface de passage d'air de transport, où 40 % à 70 % de la surface de passage d'air de l'échangeur de chaleur sont recouverts par une jalousie d'air de refroidissement servant de dispositif de commande de l'écoulement d'air.

2. Système de refroidissement selon la revendication 1, **caractérisé en ce que** le dispositif de transport d'air (20; 41, 42) et l'échangeur de chaleur (14, 15) sont configurés et disposés de manière telle, que 40 % à 70 % de la surface de passage d'air de l'échangeur de chaleur ne soient pas recouverts par la projection parallèle de la surface de passage d'air de transport.

3. Système de refroidissement selon l'une ou l'autre des revendications précédentes, **caractérisé en ce que**, dans la zone qui n'est pas recouverte par la projection parallèle de la surface de passage d'air de transport, il est prévu, entre l'échangeur de chaleur (14, 15) et le moteur (9), le dispositif (18) servant à commander l'écoulement de l'air.

4. Système de refroidissement selon l'une quelconque des revendications précédentes, **caractérisé en ce que** la surface de passage d'air de transport est disposée pratiquement de façon parallèle à la surface de passage d'air de l'échangeur de chaleur.

5. Système de refroidissement selon l'une quelconque des revendications 1 à 3, **caractérisé en ce que** la surface de passage d'air de transport est disposée de façon inclinée par rapport à la surface de passage d'air de l'échangeur de chaleur.

6. Système de refroidissement selon l'une quelconque des revendications précédentes, **caractérisé en ce que** le dispositif de transport d'air comprend au moins un ventilateur axial (20; 41, 42).

7. Système de refroidissement selon la revendication 6, **caractérisé en ce que** le ventilateur axial (20; 41, 42) présente un diamètre compris entre 250 mm et 400 mm.

8. Système de refroidissement selon la revendication 6 ou 7, **caractérisé en ce que** le ventilateur axial (20; 41, 42) présente un axe de rotation qui est disposé, radialement, à l'extérieur de la surface de passage d'air de l'échangeur de chaleur.

9. Système de refroidissement selon l'une quelconque des revendications précédentes, **caractérisé en ce que** le dispositif de transport d'air (20; 41, 42) est entouré par une virole de ventilateur (22).

10. Système de refroidissement selon la revendication 9, **caractérisé en ce que** la virole de ventilateur (22) est conçue comme un ensemble autoporteur.

11. Système de refroidissement selon la revendication 9 ou 10, **caractérisé en ce que** la virole de ventilateur (22) présente deux renforts verticaux (34, 35) qui délimitent latéralement le dispositif (18) servant à commander l'écoulement de l'air.

12. Système de refroidissement selon la revendication 9, 10 ou 11, **caractérisé en ce que** la virole de ventilateur (22) présente un renfort transversal supérieur et/ou inférieur qui délimite, en haut et/ou en bas, le dispositif (18) servant à commander l'écoulement de l'air.

13. Système de refroidissement selon la revendication 9, 10, 11 ou 12, **caractérisé en ce que** le dispositif (18) servant à commander l'écoulement de l'air est divisé en deux parties, et la virole de ventilateur (22) présente, dans le plan de partage, un renfort vertical central.

14. Système de refroidissement selon la revendication 12 ou 13, **caractérisé en ce qu'**un cadre du dispositif (18) servant à commander l'écoulement de l'air fait partie, avec des renforts, de la virole de ventilateur (22).

15. Système de refroidissement selon la revendication 12 ou 13, **caractérisé en ce qu'**un cadre du dispositif (18) servant à commander l'écoulement de l'air fait partie, avec des renforts, du dispositif (18) servant à commander l'écoulement de l'air.

16. Véhicule automobile comprenant un système de refroidissement (1) selon l'une quelconque des revendications précédentes.
